Europäisches Patentamt

European Patent Office

Office européen des brevets

(11) Publication number: **0 223 466**
**A2**

# (12) EUROPEAN PATENT APPLICATION

(21) Application number: **86308502.3**

(22) Date of filing: **31.10.86**

(51) Int. Cl.⁴: **G02B 6/16**

(30) Priority: **04.11.85 US 794992**

(43) Date of publication of application:
**27.05.87 Bulletin 87/22**

(84) Designated Contracting States:
**BE DE ES FR GB IT**

(71) Applicant: **DOW CORNING CORPORATION**
**3901 S. Saginaw Road**
**Midland Michigan 48640(US)**

(72) Inventor: **Dennis, William Erwin**
**6205 Siebert**
**Midland Michigan 48640(US)**

(74) Representative: **Laredo, Jack Joseph et al**
**Elkington and Fife High Holborn House 52/54**
**High Holborn**
**London, WC1V 6SH(GB)**

(54) Improved optical fiber.

(57) An optical communications fiber is made from a core of high refractive index glass, a cladding of lower refractive index glass, and an edge cladding of a high refractive index glass. This optical fiber does not depend upon the refractive index of the polymeric coating to function properly, because the edge cladding refracts the errant light away from the core and cladding.

EP 0 223 466 A2

# IMPROVED OPTICAL FIBER

The present invention relates to optical fibers, to the preforms used to make the optical fiber, and to the method of making the optical fibers.

Optical fibers and the uses of optical fibers are becoming increasingly important in the communications industry. The optical fibers are part of the communications technology which involves the transmission of information over long distances at high signal rates.

One of the major types of optical fibers used for transmitting information is comprised of a doped silica core and a pure silica or doped silica cladding. A dopant is an additive which is added to the silica, in most cases, to control the refractive index and coefficient of thermal expansion. The refractive index profile of the core can be either a step index design or a more complex graded index design. The refractive index at the edge of the core can be varied to produce regions of low refractive index, "wells", adjacent to regions of high refractive index, "barriers". Such variations in refractive index control the modes and wavelengths of light which are propagated through the core.

These all-silica based optical fibers are designated as glass clad silica fibers. The core, which carries the useful information, varies in size depending on the fiber design. Single or mono mode fibers usually have a small core size, 3 to 8 microns. Multimode fibers often have cores with diameters of 50 microns or more. The outside diameter of the cladding has been standardized at 125 microns for most telecommunication applications. This standardization facilitates the splicing and connectorization of the fibers.

The refractive index of the cladding must be lower than the refractive index of the core in order for the light to be guided effectively.

Many patents are present in the art which describe the manufacture of silica optical fibers. For example, U.S. Patent No. 3,659,915, issued May 2, 1972, to Maurer et al. describes a fused silica optical waveguide which is made from a doped silica core in which the dopants for increasing the index of refraction are titanium oxide, tantalum oxide, tin oxide, niobium oxide, zirconium oxide, ytterbium oxide, lanthanum oxide, and aluminum oxide. Maurer et al. teach that the cladding layer may contain dopants but that the amount of dopant in the cladding layer must not make the index of refraction higher than the index of refraction of the core. Maurer et al. teach a vapor deposition inside a glass tube as the method of making a preform from which an optical fiber can be drawn.

U.S. Patent No. 3,711,262, issued January 16, 1973, to Keck et al. describes a method of making an optical waveguide from a preform which is a tube wherein the tube contains the high refractive index silica on the inside and it is collapsed and fused when it is drawn into a fiber.

U.S. Patent No. 3,823,995, issued July 16, 1985, to Carpenter describes a method of making an optical communications fiber by vapor deposition on the outside of a starting member, i.e. a rod, and thereafter removing the rod before making the optical fiber. Carpenter also makes a multiple layer fiber in which the refractive index is lower and lower going to the outside of the fiber.

U.S. Patent No. 3,884,550, issued May 20, 1975, to Maurer et al. describes an optical waveguide fiber in which the core is pure germania or a germania-containing glass.

U.S. Patent No. 4,372,648, issued February 8, 1983, to Black describes an optical fiber in which there are a multitude of rings of differing refractive index materials arranged in a specific order to provide an optical fiber which can be used as a secure communications transmission line. The particular order of the refractive index material in the fiber provides the ability to determine if the fiber has been tampered with to obtain the information being sent.

The energy transmitted through the optical waveguide or optical fiber is electromagnetic radiation which may include wavelengths outside the visible range. For the purposes of this application, the electromagnetic radiation will be referred to as light. The light or energy which escapes from the core does not contribute to the meaningful information transmission, and there is a need to prevent it from returning to the core because it would be out of phase with the main signal. Preventing the light which has escaped from the core from again entering the core is usually accomplished by coating the fiber with a protective coating which has a higher refractive index than the glass cladding. This higher refractive index coating refracts or disperses the unwanted light away for the core.

Organic coatings designed for the protection of optical fibers have a high refractive index which effectively prevents the errant light from returning to the core. One class of materials which would be well suited for the protection of optical fibers, would be the polydimethylsiloxane elastomers, but they suffer from the disadvantage that the refractive index is approximately 1.41, too low to refract the errant light away from the cladding and core. Consequently, optical fiber manufacturers who use such protective coatings, first coat the fiber with a thin layer of a high refractive index coating, for example, a phenyl-containing siloxane elastomer or an organic coating. Such coating techniques increase the cost and complexity of using silicone elastomers for the protection of optical fibers.

The present invention relates to an optical fiber which allows the use of many kinds of coating to protect the fiber. The coating used is irrelevant with respect to whether it must be of a defined index of refraction.

This invention relates to an optical fiber comprising a core of an optical glass, a cladding layer of optical glass in which the index of refraction of the core is higher than the index of refraction of the cladding, and an edge cladding consisting essentially of a doped glass having an index of refraction higher than the index of refraction of the cladding.

This invention also relates to a method of fabricating an optical fiber to reduce the dependence of the fiber's ability to function on the primary polymeric coating comprising making a preform comprising a core of high refractive index optical glass surrounded by an optical glass having an index of refraction lower than the core glass and suitable for cladding, doping the outer surface of the preform to such a depth that a fiber drawn from the preform will have a doped glass thickness sufficient to refract away from the cladding and core those wavelengths escaping from the core transmission and passing through the cladding, said doping being done with a dopant which will provide an index of refraction greater than the index of refraction of the cladding, the doped glass thickness being an edge cladding, and drawing an optical fiber from the preform to make an optical fiber of reduced diameter which has a core, a cladding, and an edge cladding.

This invention also relates to a preform for the manufacture of optical fiber comprising a core optical glass, surrounded by a cladding glass which has an index of refraction lower than the core optical glass, and doped glass on the outer surface of the cladding which will be sufficient to provide a thickness sufficient to refract away from the cladding and core those wavelengths escaping from the core transmission and passing through the cladding when an optical fiber is drawn from the preform and where a dopant is used to make the outer surface have an index of refraction which is higher than the cladding glass.

FIG. 1 shows an oblique view of an optical fiber, optical waveguide, in accordance with this invention.

FIG. 2 shows a cross section of the optical fiber of FIG. 1 taken at line 2-2.

The optical fiber of the present invention comprises an optical glass core 10, an optical glass cladding 11, and an optical glass edge cladding 12.

The core 10 is of an optical glass which can be any of those high refractive glasses which are known in the art of optical glass fiber or waveguide, such as a doped silica or a germania glass of pure germania. These glasses are well known in the art and those skilled in the art will be familiar with the kind and diameter for the core which is suited for a particular communications application. The core usually ranges from 3 to 50 microns in diameter. Cores of 3 to 8 microns are the conventional diameter of single mode optical fiber and up to 50 microns are the multiple mode optical fiber.

The cladding 11 is of an optical glass which can be the same type of glass as used in the core but the cladding glass must have an index of refraction lower than that of the core glass. For most optical communication glass fibers the overall diameter has been standardized at 125 microns, i.e. the diameter of the core and cladding is 125 microns. The cladding can be a doped glass such as wherein the dopant is germania, but the amount of dopant used must be low enough that the index of refraction does not exceed the index of refraction of the core glass. The cladding can be pure silica which would have an index of refraction of about 1.46.

The outer surface of the cladding is doped with a dopant which will provide an edge cladding 12 which has an index of refraction higher than the index of refraction of the cladding. The edge cladding does not increase the diameter of the core-cladding diameter, but the edge cladding is the outer layer of the cladding.

The dopants which can be used to make the core, cladding, and edge cladding are those suitable for increasing the index of refraction of the glass such as those described by Maurer et al.,cited above, which shows the dopants suitable and a method of making the preform and the optical communications fiber, or waveguide. The method described by Maurer et al. is a vapor deposition inside a glass tube. The dopants include germania or germanium oxide and those described by Maurer et al., namely, titanium oxide, tantalum oxide, tin oxide, niobium oxide, zirconium oxide, ytterbium oxide, lanthanum oxide, and aluminum oxide.

The edge cladding 12 is a doped cladding layer of a thickness sufficient to refract away from the core and cladding the errant light which would cause signal problems if it were to enter the core out of phase with the signal being transmitted through the core. The thickness for the edge cladding is preferably up to 10 times the wavelength of the light being transmitted through the core. The preferred thickness is from 5 to 10 microns.

Wavelengths which are considered to be of significant utility are those of 850, 1350, and 1500 nanometres in the communications applications using optical waveguides.

The methods used to make the preforms are well known in the art and can be used in this invention if modified to make the edge cladding. Two methods for making preforms useful for the drawing of optical waveguides use the deposition of "silica soot". One method for making the preform is the outside vapor deposition (OVD) and is shown by Carpenter, cited above, which shows the OVD method for making preforms useful in the method of drawing optical fibers. A second method is the vapor deposition inside a glass tube and is often referred to as modified chemical vapor deposition (MCVD). An MCVD method is described by Maurer et al., cited above. A variation of the MCVD method uses plasma as the energy source and is called the plasma vapor deposition.

Any of the methods used to make preforms can be used as long as the method permits the formation of the edge cladding. The present invention can use any of the above deposition method techniques; however, it is not limited by any method of manufacture but is concerned with the optical properties of the cladding region, namely the edge cladding or the surface region of the cladding. Because the current commercial methods of manufacturing optical fibers utilize various techniques of depositing silica soot, these methods will be discussed in more detail.

The OVD method is particularly well suited for the preparation of the optical fibers of the present invention having the high refractive index edge cladding. In the OVD method, germania or doped silica is first deposited around a cylindrical member, a rod. This first deposition becomes the core and must have a high index of refraction to carry the light signal through the waveguide. The outer layer of the silica which is deposited makes a lower index of refraction glass than that of the core glass and this makes the cladding layer or region. To make the edge cladding and the preforms and optical fibers of this invention the composition of the vapors or soots being deposited is changed so that the last amount of cladding will have a high refractive index. This change in refractive index is accomplished by increasing the amount of dopant, such as germania during the deposition of the outer surface region of the cladding layer, thus making an edge cladding of high index of refraction. As stated above, the thickness of the high refractive index layer on the outer surface of the preform cladding layer will be sufficient to provide the edge cladding on the drawn glass fiber of up to 10 times the wavelengths being transmitted through the core. The thickness of the edge cladding on the preform will be apparent to those skilled in the art, as it is well-known that the preform draws into a fiber of the same relative proportions as the preform layers.

Although the inside vapor deposition method can be used, the quartz tube which usually becomes the cladding layer of the optical fiber will have to be coated with a doped silica soot of higher refractive index. This method will provide an optical fiber with the proper structure of this invention; however, the coating of the outer layer is an extra step and as such may be less desirable.

The optical fiber of the present invention is independent of the structure or design of the core, the signal carrying portion. The edge cladding, the light refracting and dispersing outer edge of the cladding will function with single mode, multimode, step index, graded index, and core designs with complex core edges.

The optical clarity of the edge cladding is not as critical as that of the core and cladding region. In fact, it may be desirable to dissipate the unwanted signal through absorption and dispersion in the higher refractive index edge cladding. Domains of inhomogeneity may be intentionally created in this layer. For example, the introduction of micron sized bubbles could aid in dispersing the light which reaches the outer edge of the cladding layer.

This invention relates to a method of making the optical fibers described above. This method of fabricating allows the use of coatings which do not need a certain index of refraction. The primary coating can be selected for reasons other than for the refractive index, such as for the modulus, elasticity, or buffering. Thus, the optical fiber can function without concern about what the refractive index of the primary coating is. Such independence of the optical fiber from the primary coating is significant because the primary coating can be designed or selected to provide coatability, heat stability, or moisture protection for the optical glass fiber.

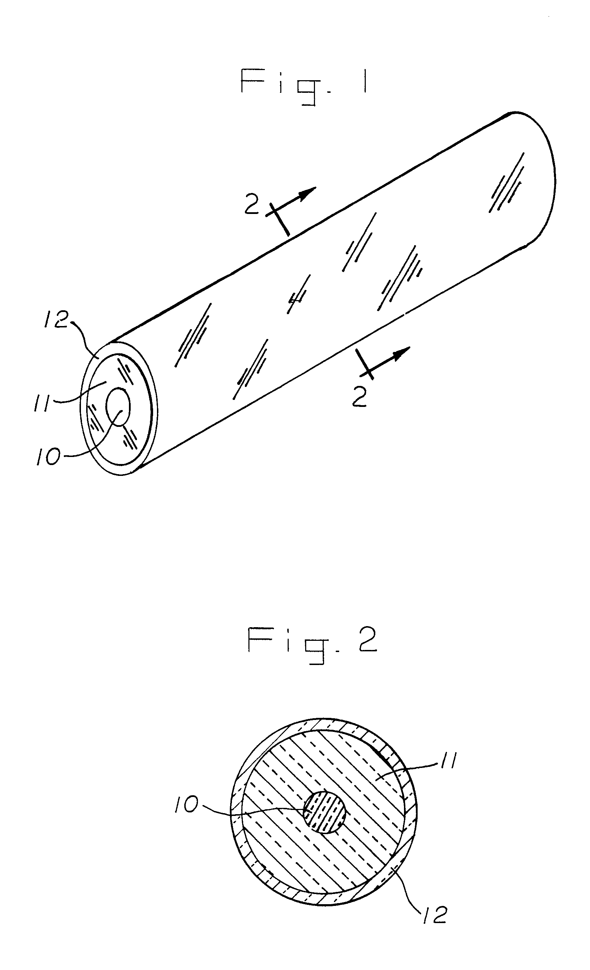

A preform is made which is a cylindrical shaped body which is constructed to be of the same kind of glass and same proportions as those desired in the optical communications fiber. The preform comprises a core of high refractive index optical glass, optical glass cladding which surrounds the core and in which the cladding has a lower index of refraction than the core glass, and an edge cladding of doped glass which has an index of refraction which is higher than the refractive index of the cladding and is of such a thickness that the errant light which escapes from the core and cladding is refracted away from the cladding and core. The preform is of the same shape and proportions as the optical fiber and is comprised of a core 10, a cladding 11, and an edge cladding 12 which are illustrated in FIG. 1 and FIG. 2.

The preform is heated and then an optical fiber is drawn from it to make the optical fiber of the present invention. Once the optical fiber is drawn, it can be passed directly into an uncured composition which can be a thermosetting or a thermoplastic material which is used for the primary coating and the secondary coating. The preferred primary coating is a silicone elastomeric coating composition which crosslinks to a silicone elastomer layer. A particular silicone elastomer coating composition would be one which is primarily a polydimethylsiloxane containing crosslinkable groups, such as by the use of ultraviolet radiation. Organic coatings are those such as acrylate polymer compositions. The secondary coatings are generally used to provide abrasion resistant coatings. The primary coatings and the secondary coatings are well known in the art and would be apparent to those skilled in the art of making optical communication fibers or waveguides.

## Claims

1. An optical fiber comprising a core of an optical glass,
a cladding layer of optical glass in which the index of refraction of the core is higher than the index of refraction of the cladding, and
an edge cladding consisting essentially of a doped glass having an index of refraction higher than the index of refraction of the cladding.

2. An optical fiber consisting essentially of a core of an optical glass,
a cladding layer of optical glass in which the index of refraction of the core is higher than the index of refraction of the cladding, and
an edge cladding consisting essentially of a doped glass having an index of refraction higher than the index of refraction of the cladding.

3. An optical fiber according to claim 1 further comprising a primary polymeric coating over the edge cladding.

4. The optical fiber according to claim 3 in which the primary polymeric coating over the edge cladding is a silicone elastomeric coating.

5. An optical fiber according to claim 3 further comprising a secondary polymeric coating which is over the primary polymeric coating.

6. A method of fabricating an optical fiber to reduce the dependence of the fiber's ability to function on the primary polymeric coating comprising
making a preform comprising a core of high refractive index optical glass surrounded by an optical glass having an index of refraction lower than the core glass and suitable for cladding,
doping the outer surface of the preform to such a depth that a fiber drawn from the preform will have a doped glass thickness sufficient to refract away from the cladding and core those wavelengths escaping from the core transmission and passing through the cladding, said doping being done with a dopant which will provide an index of refraction greater than the index of refraction of the cladding, the doped glass thickness being an edge cladding, and
drawing an optical fiber from the preform to make an optical fiber of a reduced diameter which has a core, a cladding, and an edge cladding.

7. A method of fabricating an optical fiber to reduce the dependence of the fiber's ability to function on the primary polymeric coating consisting essentially of
making a preform comprising a core of high refractive index optical glass surrounded by a optical glass having an index of refraction lower than the core glass and suitable for cladding,
doping the outer surface of the preform to such a depth that a fiber drawn from the preform will have a doped glass thickness sufficient to refract away from the cladding and core those wavelengths escaping from the core transmission and passing through the cladding, said doping being done with a dopant which will provide an index of refraction greater than the index of refraction of the cladding, the doped glass thickness being an edge cladding, and
drawing an optical fiber from the preform to make an optical fiber of reduced diameter which has a core, a cladding, and an edge cladding.

8. A method of fabricating an optical fiber to reduce the dependence of the fiber's ability to function on the primary polymeric coating consisting of
making a preform comprising a core of high refractive index optical glass surrounded by an optical glass having an index of refraction lower than the core glass and suitable for cladding,
doping the outer surface of the preform to such a depth that a fiber drawn from the preform will have a doped glass thickness sufficient to refract away from the cladding and core those wavelengths escaping from the core transmission and passing through the cladding, said doping being done with a dopant which will provide an index of refraction greater than the index of refraction of the cladding, the doped glass thickness being an edge cladding, and
drawing an optical fiber from the preform to make an optical fiber of reduced diameter which has a core, a cladding, and an edge cladding.

9. A preform for the manufacture of optical fiber comprising a core optical glass, surrounded by a cladding glass which has an index of refraction lower than the core optical glass, and doped glass on the outer surface of the cladding which will be sufficient to provide a thickness sufficient to refract away from the cladding and core those wavelengths escaping from the core transmission and passing through the cladding when an optical fiber is drawn from the preform and where a dopant is used to make the outer surface have an index of refraction which is higher than the cladding glass.

# Fig. 1

# Fig. 2